# EUROPÄISCHE PATENTANMELDUNG

(11) **EP 2 209 130 A2**
(43) Veröffentlichungstag der Anmeldung: **21.07.2010**
(21) Anmeldenummer: 08849478.6
(22) Anmeldetag: 21.11.2008
(51) Int. Cl.: H01G 9/048

(54) **MEHRSCHICHTIGE ANODE**

(30) Priorität: 12.11.2007 RU 2007141591
(71) Anmelder: Obschestvo S Ogranichennoi Otvetstvennostyu 'VOSTOK', Ul. Generala Ermolova 2 Moscow 121170 (RU)
(72) Erfinder: SHCHERBAKOV, Igor Vladimirovich, Moscow 123100 (RU); SLEPTSOV, Vladimir Vladimirovich, Moscow 113628 (RU)
(74) Vertreter: Jeck, Anton
(86) Internationale Anmeldenummer: PCT/RU2008/000714
(87) Internationale Veröffentlichungsnummer: WO 2009/064220

(57) **Zusammenfassung**

Die Erfindung betrifft eine Mehrschichtanode für einen elektrolytischen Kondensator mit einer stromführenden großoberflächigen Foliengrundlage aus Aufdampfmetall, wobei auf ihrer Oberfläche aufeinander folgend eine Konformschicht eines Ventilmetalls aus reaktionsfreudigem Aluminium mit regelbarer Volumenporosität und ein Oxidüberzug angeordnet sind, wobei die Grundlage und die Konformschicht des Ventilmetalls mittels eines Hetero-Übergangs gekoppelt sind und der Hetero-Übergang durch untereinander formgeschlossene Nanoteilchen des Grundlagemetalls und des Ventilmetalls ausgebildet ist, wobei die Grundlage mit dem Folienträger über eine Nanoverbundsperrschicht gekoppelt ist und die Nanoverbundsperrschicht eine differenzierte Mischung von zu verbindenden Materialien darstellt und wobei der Inhalt der Materialien sich gegenläufig je nach Zunahme der Schichtstärke ändert und dabei eine Arbeitsoberfläche praktisch durch das Metall der Grundlage bildet. Damit die Funktionssicherheit und die grundlegenden technischen Kenndaten der Mehrschichtanode beim Einsatz in Elektrolytkondensatoren erhöht sind, sieht die Erfindung vor, dass als Material der Grundlage ein solches Metall (vorwiegend Titan) eingesetzt ist, dessen Härte die des Ventilmetalls 2- bis 4-fach überschreitet und dass die Porengröße der Ventilmetallschicht innerhalb eines Bereichs von 1 bis 10nm liegt.

## Beschreibung

Die Erfindung betrifft eine Mehrschichtanode für einen elektrolytischen Kondensator nach dem Oberbegriff des Anspruchs 1.

Die Erfindung betrifft Hauptelemente einer elektrischen Ausrüstung, nämlich Mehrschichtfilmelektroden für Elektrolytkondensatoren.

Die Erfindung DE 102004011567, H 05K 3/38, 2004 offenbart eine eloxierte, sehr großoberflächige Mehrschichtfolienelektrode. Ihre stromführende Grundlage ist auf einem Folienträger befestigt. Der Folienträger ist dabei für eine Verarbeitung als Rollenmaterial geeignet. Auf der stromführenden Grundlage sind Schichten von Ventilmetall und von Oxidüberzug mit bimodaler Morphologie aufgetragen. Dabei ist die fraktalähnliche Rauigkeit der Grenzflächen aufrechterhalten.

Die Adhäsionsbindung stellt eine nanostrukturierte Übergangsschicht mit einem großoberflächigem Folienträger (aus verschiedenen Werkstoffen) und mit einem Vakuum-CVD-Aluminium der Anode-Grundlage dar.

Die raue Oberfläche des Trägers ist mittels Ionenbeschusses aktiviert. Das Metall, vorzugsweise Aluminium, ist auf dieser aktivierten Trägeroberfläche nach einem quasi einheitlichen Vorgang unter Niederdruckinertgas aufgedampft. Dabei ist die Nanostruktur in Form einer differenzierten Werkstoffmischung vom Träger und vom Aufdampfmetall ausgebildet. Die Menge dieses Metalls nimmt mit einer Vergrößerung der Übergangs-Nanoschicht zu und erreicht 100 %, weil sich die Trägermaterialkomponente dementsprechend nahtlos allmählich zusammenzieht und praktisch auf der Oberfläche dieser Adhäsionsschicht verschwindet.

Somit geht das Trägermaterial in der ausgebildeten, einige nm bis einige µm starken Nanoverbundadhäsionsschicht in ein stromführendes Aufdampfmetall über. Dadurch ist eine hohe Bindungsfestigkeit der Anode-Strukturelemente sichergestellt, welche eine affine Verbindung aufweisen.

Die Nanoverbundübergangsschicht stellt ein lyophobes Verhalten der Verbindung sicher und dient als Sperre, welche die gegenseitige Diffusion an der Grenzfläche Träger - Grundlage verhindert.

Die Festigkeit der Adhäsionsverbindung der stromführenden Schicht mit dem Kunststoffträger kann erhöht werden, indem die Übergangsschicht geordnet ausgebildet wird. Die Einordnung erfolgt mittels der Ausbildung einer diamantähnlichen Nano schicht einer sp3-Hybridisierung der Atomzustände des amorphen Kohlenstoffs (a-C:H) nach dem in der RU-Patentschrift 2217394, C 03C 17_34, G 02B 5/28, 2003, offenbarten Verfahren. Das verbessert das plastische Verhalten der Übergangsstelle wesentlich. Somit ist die Dehnbarkeit des mehrschichtigen Materials sichergestellt. Das Material ist somit für die rollenweise Anodenfertigung geeignet.

Danach wird das Ventilmetall (vorzugsweise poröses Aluminium) aufgedampft, indem es auf die Oberfläche der Alu-Folie unter Niederdruckinertgas und im Beisein von Sauerstoff verdampft wird, wobei der Sauerstoffdruck um 1 - 2 Größenordnungen kleiner ist. Die Ausbildung der Großarbeitsoberfläche erfolgt dabei durch einen Zusatz des Materials und nicht durch seine Entfernung (wie es beim üblichen Ätzen der Fall ist). Deshalb ist bei der Anode für Elektrolytkondensatoren der Einsatz von dünnerer Folie als stromführende Grundlage am besten geeignet.

Die Besonderheit der dielektrischen Oxidschicht dieser Anode besteht in ihrer bimodalen Morphologie: einerseits das porendichte homogene Oxid und andererseits der poröse Oxidüberzug. Das porendichte Oxid ist diskret auf die Großoberfläche der Grundlage gefällt. Der poröse Oxidüberzug ist mittels elektrolytischen Anodierens ausgebildet.

Der Mangel der beschriebenen Mehrschichtanode ist ihre nicht zufriedenstellende funktionelle Zuverlässigkeit infolge der Migrationsvorgänge der gegenseitigen Diffusion an den Grenzen der Einzeleinschlüsse des Ventilmetalls mit den Materialien der angrenzenden Schichten der Grundlage und der Oxidschicht während des Betriebs. Das verursacht eine Instabilität der grundlegenden technischen Kenndaten des elektrolytischen Kondensators und vermindert merklich seine Lebensdauer.

Der genannte Mangel ist in der Mehrschichtfolienanode für einen elektrolytischen Kondensator aus dem Patent RU 56709, HOFO 9/04, 2006 beseitigt. Diese Anode ist ihrem technischen Wesen und der Anzahl der übereinstimmenden Merkmale nach als der nächste Stand der Technik gegenüber der vorgeschlagenen Anode gewählt.

Diese bekannte Mehrschichtanode für einen elektrolytischen Kondensator ist durch ihre breiteren verfahrenstechnischen Möglichkeiten dank dem Einsatz von unterschiedlichen Materialien des Folienträgers gekennzeichnet, welche gleichmäßig an die funktionellen Folienbeschichtungen mittels einer adhäsiven Nanoverbundsperrschicht angepasst sind.

Dabei weist die Anode eine erhöhte spezifische Kapazität und Dielektrizitätskennzahl auf. Darüber hinaus sind dank der hohen Haftfestigkeit der Strukturschichten die mechanischen Kenndaten sowie die Plastizität der Anode verbessert. Das ermöglicht es, die Mehrschichtanode rollenweise (in Rollen) zu fertigen, indem alle Überzüge und Schichten innerhalb eines quasi einheitlichen Vorgangs des Plasmasprühverfahrens aus der Dampfphase im Vakuum der geregelten Atmosphäre des Inert- und des chemisch aktiven Gases auf den Folienträger aufeinander folgend aufgetragen werden. Das bedingt eine vielseitige Anwendbarkeit der Technologie, schließt die Flussunterbrechung aus und senkt die Produktionskosten.

Die Ausbildung der porösen Alu-Einschlüsse in Form einer konformen Oxidüberzugschicht (ähnlich wie beim großoberflächigen Profil der Grundlage) vergrößert mehrfach die Kontaktfläche für die Zusammenwirkung mit den Elektrolyten des Kondensators. Das erhöht seine spezifische Kapazität wesentlich.

Das Ventilmetall ist in Form einer Überzugsschicht aus porösem Alu gebildet. Dieses Ventilmetall stellt eine Großoberfläche sicher, welche für die Auffüllung mit dem Elektrolyten vorgesehen ist. Das ermöglicht es, im Kondensator den Festelektrolyten zu benutzen. Somit sind die verfahrenstechnischen Einsatzmöglichkeiten erweitert.

Die verfahrenstechnische Prozesssicherung und -versorgung mit Mitteln zur Plasmazerstäubung des elektrochemisch aktiven Ventilmetalls ist im Endeffekt auf die Erzeugung einer stärkeren Qualitätsoxidschicht abgezielt, um die Arbeitsspannung des Kondensators mit erhöhter Kapazität zu steigern.

Die Konformschicht des Ventilmetalls ist mit der großoberflächigen Grundlage mittels eines Hetero-Übergangs gekoppelt. Der Hetero-Übergang stellt eine nanostrukturierte Zusammensetzung aus dem Grundlagenmaterial und dem aufgedampften Ventilmetall unter der durch die Ionen von Inert- und chemisch aktivem Gas geförderten Diffusion dar. Eine solche Kopplung ermöglicht es, die verfahrenstechnischen Möglichkeiten bei der Herstellung der Folienanode auf einem praktisch beliebigen Träger zu erweitern. Dabei sind scharfe Grenzflächen zwischen den formbildenden Schichten vermieden.

Der Mangel dieser bekannten Mehrschichtfolienanode mit Alu als Material für die stromführende Grundlage sowie für das leicht oxidierbare Überzugs-Ventilmetall ist also eine unstabilisierte Geometrie der ausgebildeten großoberflächigen Grundlage. Das beschränkt die Einsatzmöglichkeiten bei ihrer Anwendung im Elektrolytkondensator.

Es ist Aufgabe der Erfindung, die Funktionssicherheit und die grundlegenden technischen Kenndaten der Mehrschichtanode beim Einsatz in den Elektrolytkondensatoren zu erhöhen.

Die gestellte Aufgabe wird durch die Merkmale des Anspruchs 1 gelöst.

Das erforderliche technische Ergebnis ist in folgender Weise erreicht:

Die bekannte Mehrschichtanode für einen elektrolytischen Kondensator enthält eine stromführende großoberflächige Foliengrundlage aus Aufdampfmetall sowie eine Konformschicht aus Ventilmetall und einen Oxidüberzug. Diese sind auf der Foliengrundlage aufeinander folgend angeordnet. Die Konformschicht aus Ventilmetall weist eine regelbare Volumenporosität auf und ist aus reaktionsfreudigem Aluminium hergestellt. Dabei sind die Grundlage und die Konformschicht aus Ventilmetall mittels eines Hetero-Übergangs gekoppelt. Der Hetero-Übergang ist durch die untereinander geometrisch geschlossenen Nanoteilchen des Grundlagemetalls und des Ventilmetalls gebildet. Dabei ist die Grundlage mit dem Folienträger mittels einer Nanoverbundsperrschicht gekoppelt. Die Nanoverbundsperrschicht stellt eine differenzierte Mischung von zu verbindenden Materialien dar. Der Inhalt dieser Materialen ändert sich entgegengesetzt mit der Zunahme der Stärke der Schicht, deren Arbeitsfläche praktisch durch das Metall der Grundlage ausgebildet ist. Gemäß der Erfindung wird als Material der Grundlage ein Metall benutzt, dessen Härte um das 2- bis 4-fache die Härte des Ventilmetalls überschreitet, vorwiegend Titan. Die Größe der Poren der Ventilmetallschicht ist durch den Größenbereich von 1 x 10⁴ nm beschränkt.

Die kennzeichnenden Merkmale ermöglichen es, die Mehrschichtanode für den elektrolytischen Kondensator zu verbessern, indem höhere grundlegende technische Kenndaten gesichert sind.

Die Wahl von Titan als Material für die Grundlage in der Mehrschichtanode ist durch die verfahrenstechnische und Adhäsionsverträglichkeit mit dem Aufdampfalu der Ventilschicht bedingt. Das ist für eine stabile Funktion im Elektrolytkondensator grundsätzlich notwendig.

Die Brinell-Mikrohärte der Titanfolie beträgt ca. 600 MPa. Der Einsatz von Titan als Material für die stromführende Grundlage ermöglichte es, das Profil der großoberflächigen Mikrostruktur mit dem auf diese Oberfläche aufgedampften, reaktionsfreudi gen Aluminium zu stabilisieren. Das Aufdampfaluminium bildet dabei die Konformschicht mit einer Mikrohärte von 150 - 250 MPa, welche dementsprechend die der Grundlage um das 4- bzw. 2,4-fache unterschreitet.

Aluminium als Ventilmetall scheint fertigungsgerecht am besten geeignet zu sein. Ist als Metall der Grundlage ein solches Metall verwendet, dessen Härte die Härte von Alu um weniger als das 2-fache überschreitet, so ist es nicht möglich, die stabile

Geometrie der Übergangsnanostruktur ihrer wechselseitigen Verbindung zu erreichen, damit sie praktisch bestimmungsgemäß anwendbar ist.

Das Grundlagemetall, dessen Härte die Härte des Ventilmetalls mehr als vierfach überschreitet, bedingt eine Sprödigkeit der mehrschichtigen Folienzusammensetzung. Das beschränkt ihren Einsatz als Anode eines elektrolytischen Kondensators.

Beim Hetero-Übergang ist an den Grenzflächen der Anschlussnanoteilchen des Grundlagemetalls und des Ventilmetalls (Titan - Aluminium) eine elektrische Doppelschicht gebildet. Diese erhöht die Adhäsion bei ihrem spielfreien Anschluss wesentlich. Folglich sind die elektrischen Arbeitskenndaten der Elektrodenfolie bei ihrem Betrieb erhöht und stabilisiert.

Die Ausbildung des Hetero-Übergangs aus den zwischeneinander geometrisch geschlossenen Nanoteilchen von Titan und Aluminium schafft praktisch eine luftdichte Versiegelung der Grenzflächen. Somit gewinnt die ausgebildete Adhäsionsschicht an Sperreigenschaften und verhindert dadurch eine gegenseitige Diffusion. Das ermöglicht es, die elektrisch-physikalischen Eigenschaften der Mehrschichtfolienanode in der Zusammensetzung des elektrolytischen Kondensators beim Betrieb unverändert aufrechtzuerhalten.

Gemäß der Erfindung wird mittels der verfahrenstechnischen Parameter der Plasmazerstäubung unter Vakuum die optimierte Porengröße des reaktionsfreudigen Aluminiums der ausgebildeten Konformschicht geregelt, welche auf die großoberflächige Titan-Grundlage aufgetragen wird. Diese Porengröße liegt im Bereich von 1 bis 10 nm und wird gemäß folgender Begrenzungen optimiert.

Bei Porengrößen von über 10⁴ nm ist die wirksame Oberfläche der nanoporösen Struktur des Ventilmetalls nicht ausreichend, um die praktisch erforderliche Kondensatorkapazität zu erreichen. Das liegt daran, dass sie physikalisch direkt proportional zusammenhängen.

Bei einer Porengröße von unter 1 nm dringt der Elektrolyt nicht mehr hinein. Deswegen ist die Großoberfläche des Porenraums an der Bildung der Kondensatorkapazität nicht mehr beteiligt. Das vermindert wesentlich seine elektrotechnischen Kenndaten.

Folglich ist jedes einzelne wesentliche Merkmal erforderlich, und ihre Gesamtheit und der feste Zusammenhang sind dafür ausreichend, die notwendige Neuheit sicherzustellen, welche durch die einzelnen Merkmale alleine nicht erreichbar ist. Das ermöglicht es, die gestellte technische Aufgabe nicht durch die "Summe" von einzelnen Effekten, sondern durch den neuen Extra-Effekt der Summe von Merkmalen zu lösen.

Die durchgeführte Vergleichsanalyse der vorgeschlagenen technischen Lösung mit dem festgestellten Stand der Technik, aus dem die angemeldete Erfindung für einen Fachmann in der Elektrotechnik nicht eindeutig herauslesbar ist, hat gezeigt, dass diese Lösung nicht bekannt ist. Da die Mehrschichtanode in Rollen serienmäßig praktisch hergestellt werden kann, kann man schließen, dass die Voraussetzungen für die Patentierfähigkeit erfüllt werden.

Das Wesen der Erfindung wird anhand der Zeichnungen näher erklärt. Die Zeichnungen dienen nur zur Veranschaulichung und begrenzen nicht den Umfang des Patentanspruchs. Es zeigen:
- Fig. 1: den Aufbau (Struktur) einer vorgeschlagenen Anode und
- Fig. 2: das Detail eines Hetero-Übergangs

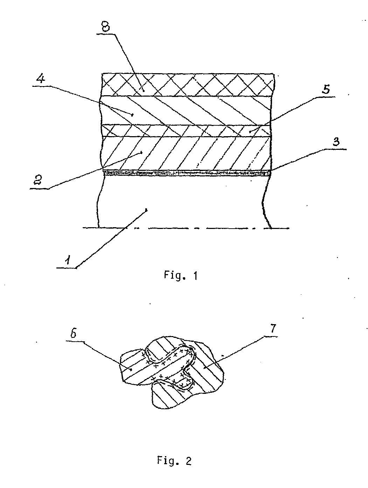

In Fig. 1 ist die Stärke der unterschiedlichen Folien und Schichten nur bedingt und unabhängig vom Maßstab dargestellt.

Die Mehrschichtfolienanode ist rollenweise in Vakuummodulen gefertigt. Die Vakuummodule sind an einem gemeinsamen Gestell befestigt und miteinander mit Schleusenkammern verbunden. Die Vakuummodule sind mit der Stromversorgung für Ionenquellen und Magnetronanlagen, mit einer Vakuumbehandlungseinrichtung und mit einem Antrieb zum Transport der behandelten endlosen Folie ausgerüstet.

Als Träger 1 der Mehrschichtanode dienen verschiedene Materialien, z. B. Alu- oder Kupferfolie, Polyesterfolie und sonstige ähnliche Werkstoffe.

In den Modulen für das Magnetron-Plasmaspritzen der Materialien aus der DampfPhase sind verfahrenstechnische Trommeln eingebaut. Sie werden bis zu einer Temperatur von Minus 50 - 100 °C gekühlt, um das Durchbrennen der Folie bei der anschließenden Behandlung zu verhindern.

Die Oberfläche des Trägers 1 ist vorzeitig gereinigt und mittels Ionenbeschusses aktiviert. Somit wird eine zusätzliche Reliefdurcharbeitung erreicht, wodurch der Großoberflächenfaktor, das Verhältnis der tatsächlichen und der geometrischen Oberflächen, mehrfach, d. h. um das 100- bis 1.000-fache erhöht ist.

Die leitfähige 12 - 50 µm starke Metallschicht (Titan) wird unter entlüftetem Inertgas (Argon) mit der Beimischung eines reaktionsfreudigen Gases (Sauerstoff) auf den Träger 1 gefällt. Damit ist die Foliengrundlage 2 gefertigt.

Dabei ist auf der Grenzfläche eine Adhäsionssperrschicht 3 in Form eines Nanoverbundstoffs gebildet, welcher eine ihrem Inhalt nach differenzierte Mischung der verbundenen Materialien darstellt.

Der Inhalt des Materials des Trägers 1 und des gefällten Titans der Grundlage 2 ergänzen einander gegenseitig und verändern sich gegenläufig jeweils von 100 % bis Null: Träger 1 (100 - 0) und Titan (0 - 100).

Danach ist Titan auf die Titanoberfläche der Adhäsionsschicht 3 nach dem quasi einheitlichen Verfahren der Plasmazerstäubung (Sputtering) aus der Dampfphase gefällt. Dadurch ist die stromführende Schicht der Grundlage 2 ausgebildet.

Eine wichtige Besonderheit besteht darin, dass die Vermischung der verbundenen Materialien während der Zeit erfolgt, in der der Aktivierungsvorgang des Trägers 1 noch nicht abgeschlossen ist. Infolge des quasi einheitlichen Verfahrens ist der Nanoverbundwerkstoff der Adhäsionsschicht 3 aufgebaut, wo das Material des Trägers 1 auf der Oberfläche in das gefällte Metall (Titan) wandert, welches nachher in die Grundlage 2 umgeformt wird.

Insbesondere wird auf der modifizierten Polyesterfolie des Trägers 1 aus den Zyklohexan-Dämpfen mittels Plasma-Fällung die Beschichtung in Nanogrößen (10 - 50 nm) gebildet. Diese Beschichtung besteht aus amorphem Kohlenstoff im zR3-Hybridisierungszustand. Das ist eine diamantähnliche (a-C:H) Adhäsionsschicht, welche eine potentielle Sperre darstellt, die mit Titan zusammenwirkt.

Die Adhäsionsschicht 3 stellt eine Sperre für die aktiven Bestandteile des Polymers des Trägers 1 dar. Dadurch wird die Beständigkeit der elektrophysikalischen Eigenschaften während des Betriebs sichergestellt.

Die Ausbildung der Sperrschicht 3 aus Nanoverbundstoff (mit der Stärke von 20 nm bis 20 µm) stellt eine Hochadhäsionsbindung von praktisch allen Materialien dar, die für die Herstellung der Folienanode notwendig sind.

Die Verbundstruktur der Adhäsionsschicht 3 stellt eine lyophile Versiegelung des Trägers 1 sicher, indem ihre Betriebseigenschaften verbessert werden.

Danach erfolgt die Fällung des Ventilmetalls, d. h. des porösen Aluminiums, welches die Konformschicht 4 bildet. Dafür wird die Kammer der Arbeitsmodule bis zu einem Druck von (5 - 1)x 10"⁵ mm Hg entlüftet. Danach wird Argon in die Ionenquellen hineingelassen, bis ein Druck von (5 - 10)x 10"⁵ mm Hg erreicht ist. Danach wird Sauerstoff in einer Menge von 30 - 40 Vol. % beigemischt. Der Druck in der Kammer der Arbeitsmodule ändert sich im Bereich von 0,1 bis 0,0001 mm Hg.

Danach werden die Ionenquellen eingeschaltet, indem eine Stromversorgung mit einer Spannung von 3,0 - 4,5 kV und einem Strom von 250 - 400 mA angelegt werden. Als Ergebnis erfolgt das Plasmaspritzen von Aluminium, dessen Atome sich auf der Grundlage 2 niederschlagen und somit eine feine poröse Schicht 4 bilden, deren Stärke bis zu 100 nm beträgt.

Dabei ist die zunehmende Schicht 4 des Ventilmetalls mit Argon- und Sauerstoffionen behandelt. Als Ergebnis entsteht ein Hetero-Übergang 5 in Form einer Nanostruktur-Zusammensetzung, welche Nanoteilchen 6, 7 (Fig. 2) des porösen Ventilmetalls der Schicht 4 und des Materials der Grundlage 2, Aluminium und Titan, jeweils einschließt.

Die Nanoteilchen 6 und 7 des Hetero-Übergangs 5 bilden untereinander einen Formschluss. Dabei entsteht an den Grenzflächen eine elektrische Doppelschicht mit Gegenpotential. Das erhöht wesentlich die Adhäsionskräfte und stabilisiert die Geometrie des großoberflächigen Trägers 2 und der Informationsmatrix des gesamten Erzeugnisses.

Der ionenverdichtete Hetero-Übergang 5 stellt eine Hochadhäsion der Verbindung der angrenzenden Schichten 2 und 4 sicher und dient als eine Sperre, die die Migrationsvorgänge zwischen der Grundlage 2 und der porösen Schicht 4 des Ventilmetalls verhindert.

Bei der Mitwirkung des Magnetronsputtern der Schicht 4 des porösen Aluminiums mit den Inertgasionen (Argon) wird die Diffusion der Zusammensetzung des Hetero-Übergangs 5 gefördert. Das stellt eine Gleichmäßigkeit der gegenseitigen Verteilung von Strukturelementen der angrenzenden Schichten 2 und 4 sicher. Dabei wachsen die Nanoteilchen 6 des Aufdampfaluminiums in die Nanoteilchen 7 von Titan durch, bilden somit einen Formschluss untereinander (Fig. 2) und strukturieren den Hetero-Übergang 5 mit hohen Adhäsions- und Sperreigenschaften.

Die Nanostruktur der Zusammensetzung des Hetero-Übergangs 5 wirkt als Innenenergiespeicher der Schicht dank der Zunahme von Strahlenschäden, die infolge der Ionenbehandlung der Oberfläche der Titangrundlage 2 und der gebildeten Ventilschicht 4 aus porösem, reaktionsfreudigem Aluminium entstehen. Dabei kommen die Verfestigung der Grenzflächen der Nanoteilchen 6 - 7 des Hetero-Übergangs 5 sowie eine Deformationsverfestigung und eine teilweise Auflösung zustande. Das verhindert die Entstehung und die Bewegung von Versetzungen (Dislokationen), das heißt, die Rissbildung in den angrenzenden Strukturschichten 2, 4 der Anode wird geschlossen.

Die Mitwirkung von Ionen des reaktionsfreudigen Gases (Sauerstoffs) stellt ein Erreichen einer elektrochemischen Aktivität der Schicht 4 des Ventilmetalls sicher. Infolge des Hetero-Übergangs 5 wird eine raumporöse Schicht 4 von Aluminium ausgebildet, der eine mehrfache Vergrößerung der großoberflächigen Grundlage 2 eigen ist, um mit dem Kondensatorelektrolyten zusammenzuwirken.

Die Stärke der porösen Aluminiumschicht 4 beträgt 0,05 bis 30 µm.

Die Anzahl und die Struktur der Poren in der Schicht 4 des gefällten Aluminiums ist nach dem mathematischen Modell einer Versuchsplanung als Funktion von vielen Variablen festgelegt und zwar: Zusammensetzung und Druck des Gasmediums, Temperatur der Grundlage 2, Spannung und Strom bei der Magnetronentladung sowie die Anzahl von Elektronen, welche auf die Grundlage 2 während des Wachstums der Schicht 4 übergehen.

Der Porendurchmesser ist innerhalb des optimalen Bereichs von 1 nm bis 10 nm änderbar, indem die oben genannten Parameter variiert werden.

Wenn die größeren Poren in der Schicht 4 vorherrschen, ist eine Struktur erzeugt, welche die Kapazität der Kondensatoren mehrfach erhöht.

Die Dominanz der Kleinporen in der Schicht 4 stellt eine Steigerung ihrer elektrochemischen Aktivität sicher.

Die Wachstumsgeschwindigkeit der Schicht 4 des porösen Aluminiums beträgt 1,5 µm/Min.

Das Vorhandensein einer geregelten Volumenporosität innerhalb des optimierten Größenbereichs und die Bildung von Strahlungsschäden in der Schicht 4 des Ventil metalls mittels der Ionenbehandlung verursachen eine Erhöhung der elektrochemischen Aktivität des Materials, welche durch die Regelung der Porenanzahl und der Porengröße im Umfang des Aufdampfaluminiums steuerbar geändert werden kann.

Die auf eine solche Weise gebildete poröse Struktur der Aufdampfaluschicht 4 lässt sich leichter eloxieren, wodurch eine weniger mechanisch gespannte Oxidschicht 8 ausgebildet wird.

Daraus folgt, dass die Konformschicht 4 des porösen im Vakuum nach dem Sputtern-Verfahren aufgetragenen Aluminiums auf der stabilisierten Titangrundlage 2 es ermöglicht, den stärkeren verdichteten Oxidüberzug 8 einer qualitativ neuen Mehrschichtanode (Fig. 1) zu erhalten. Das gilt als Voraussetzung für die Herstellung von Hochspannungselektrolytkondensatoren mit einer Betriebsspannung von über 600 V.

Die nanodimensionalen Poren in der Schicht 4 des aufgedampften Aluminiums stellen eine Erhöhung der elektrischen Kapazität der Anode in der Oxidüberzugsschicht 8 sicher. Diese Oxidüberzugsschicht 8 ist für den Einsatz in Nieder- und Mittelspannungskondensatoren (jeweils 30 - 60 V und 200 - 250 V) geeignet.

Die relative Vermehrung der Poren im Umfang der Aluschicht 4, wobei die Porengröße innerhalb des optimierten Mikrometerbereichs liegt, ermöglicht es praktisch, die Hochspannungsfolie mit einer 1 µm starken Funktionsbeschichtung herzustellen. Diese stellt die Speicherung der Ladung mit einer Spannung von 700 V aufgrund der allgemein bekannten Kenndaten 1,5 nm/V für den Oxidüberzug 8 sicher.

Die fertige Mehrschichtanode wird im Auslademodul in Rollen aufgewickelt und der Anlage entnommen, um nachfolgend eloxiert (geformt) zu werden, bis eine vorgegebene Arbeitsspannung erreicht ist, indem der Oxidüberzug 8 auf der Schicht 4 gebildet wird.

Die vorgeschlagene Mehrschichtanode ist nach einem quasi einheitlichen Verfahren gefertigt. Dabei sind die Betriebsarten und die Parameter der Vakuumvorgänge der Ionenbehandlung der Oberfläche sowie des Plasmaspritzens des Ventilmetalls unter Mitwirkung der Ionen von neutralem Gas und von reaktionsfreudigem Gas stufenweise geändert.

Die Erfindung ermöglicht es, anhand der bekannten verfahrenstechnischen Schritte eine qualitativ neue Wechselbeziehung der Strukturkomponenten der Mehrschichtanode für Elektrolytkondensatoren zu erhalten. Diese Mehrschichtanode ist für den Betrieb sowohl mit flüssigen als auch mit festen Elektrolyten universell geeignet.

Die vorgeschlagene Anode ist durch eine stabile Struktur gekennzeichnet, welche die für den Einsatz wichtigen Kenndaten verbessert. Dazu zählt z. B. eine wesentliche Erhöhung der elektrischen Kapazität.

Beim Hetero-Übergang sind mechanische Spannungen so gut wie ausgeschlossen. Die Sperreigenschaften des nanostrukturierten Hetero-Übergangs stellen eine Stabilität der elektrotechnischen Kenndaten der Anode während der gesamten, bedeutend längeren Betriebszeit als Bestandteil des elektrolytischen Kondensators sicher.

Das Verfahren zur Herstellung einer Mehrschichtanode mit volumenporöser Konformschicht des aufgedampften Ventilmetalls (Aluminium) auf einer großoberflächigen, stromführenden Titangrundlage, die mittels einer Nanoverbundsperre am Träger aus unterschiedlichen Materialien haftet, ist durchgearbeitet und für eine gewerbliche Anwendung geeignet.

Die vorgeschlagene technische Lösung schafft eine grundsätzliche Möglichkeit zur Herstellung einer Mehrschichtanode in Übereinstimmung mit dem oben Dargelegten. Die Herstellung der Mehrschichtanode erfolgt im Rahmen eines einheitlichen verfah renstechnischen Vorgangs der Plasmazerstäubung. Das Endprodukt ist der Elektrolytkondensator. Er wird gefertigt, indem die Schichten des festen Elektrolyts und des Ventilmetalls mit Kathodefunktion aufeinander folgend auf den Oxidüberzug des E-lektrolytkondensators aufgetragen werden.

## Patentansprüche

1. Mehrschichtanode für einen elektrolytischen Kondensator mit einer stromführenden großoberflächigen Foliengrundlage aus Aufdampfmetall, wobei auf ihrer Oberfläche aufeinander folgend eine Konformschicht eines Ventilmetalls aus reaktionsfreudigem Aluminium mit regelbarer Volumenporosität und ein Oxidüberzug angeordnet sind, wobei die Grundlage und die Konformschicht des Ventilmetalls mittels eines Hetero-Übergangs gekoppelt sind und der Hetero-Übergang durch untereinander formgeschlossene Nanoteilchen des Grundlagemetalls und des Ventilmetalls ausgebildet ist, wobei die Grundlage mit dem Folienträger über eine Nanoverbundsperrschicht gekoppelt ist und die Nanoverbundsperrschicht eine differenzierte Mischung von zu verbindenden Materialien darstellt und wobei der Inhalt der Materialien sich gegenläufig je nach Zunahme der Schichtstärke ändert und dabei eine Arbeitsoberfläche praktisch durch das Metall der Grundlage bildet,
**dadurch gekennzeichnet,**
**dass** als Material der Grundlage ein solches Metall (vorwiegend Titan) eingesetzt ist, dessen Härte die des Ventilmetalls 2- bis 4-fach überschreitet und
**dass** die Porengröße der Ventilmetallschicht innerhalb eines Bereichs von 1 bis 10 nm liegt.
